# EUROPEAN PATENT APPLICATION

(11) **EP 4 598 121 A1**
(43) Date of publication of application: **06.08.2025**
(21) Application number: 24155069.8
(22) Date of filing: 31.01.2024
(51) Int. Cl.: H04W 36/00, H04W 36/32

(54) **MOBILITY IN A WIRELESS COMMUNICATION NETWORK**

(71) Applicant: Nokia Solutions and Networks Oy, 02610 Espoo (FI)
(72) Inventor: BRYLKA, Marek, 51-112 Wroclaw (PL); PAKULSKI, Maciej, 55-003 Nadolice Wielkie (PL)
(74) Representative: Nokia EPO representatives

(57) **Abstract**

A wireless communication network that supports mobility of a user equipment from a source cell to a target cell. The network providing the target cell is configured to receive handover preparation information for a handover from the source cell to the target cell and where the handover preparation information indicates that the target cell has a lower signal strength than the source cell, the target cell generates an indication of a prohibit time, the prohibit time being a time period following handover during which a user equipment should be impeded from a handover back to said source cell.

## Description

### TECHNOLOGICAL FIELD

Various example embodiments relate to mobility in wireless communication systems, and in some embodiments to inhibiting ping pong, that is a handover back to a source cell from a target cell.

### BACKGROUND

It is important to provide service continuity for users moving across the cells in wireless communication systems. Typically, cell change is triggered if a neighbour cell becomes better than the serving one. The handover process is well known and well defined, but in challenging circumstances some problems may arise, potentially compromising the cellular service quality and continuity. One challenging environment for cellular networks is the high speed environment where user equipment are travelling fast. This can be exacerbated where multiple devices are travelling together for example in: high speed trains, highways, or in cellular service provided to airplanes. This leads to many devices needing to change cells within a short period of time which can lead to high load on the network processing and signalling systems.

### BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various embodiments of the invention.

According to various, but not necessarily all, example embodiments of the disclosure there is provided an apparatus comprising: at least one processor; and at least one memory storing instructions that when executed by the at least one processor cause the apparatus at least to perform: receive handover preparation information said handover being from a source cell to a target cell said apparatus supporting coverage in said target cell; and where said handover preparation information comprises an indication that said target cell has a lower signal strength than said source cell; generate an indication of a prohibit time, said prohibit time being a time period following handover during which handover back to said source cell for said user equipment should be suspended.

The apparatus seeks to allow handovers to be triggered early while the signal strength at the UE of the serving, also known as source, cell is still better than the target cell. This allows additional time for the handover to occur before radio coverage from the serving cell is lost. A potential drawback is that as the source cell signal is better than the target cell, a subsequent handover back to the source cell or ping pong may be triggered. This problem is addressed by providing a prohibit time duration following handover during which the user equipment is prohibited from a handover back to the source cell.

In some embodiments, said indication comprises an indication of a handover condition triggering said handover, said handover condition comprising a negative offset, that is said handover is triggered when said target cell signal strength is greater than said source cell signal strength plus said negative offset.

In some embodiments, said indication comprises an indication of a difference between said signal strength at said target cell and said signal strength at said source cell, said difference being a delta amount and said delta amount being negative.

In some embodiments, said handover preparation information comprises a UE speed.

In some embodiments, said prohibit time is determined in dependence upon at least one of the following: a negative offset, that is said handover is triggered when said target cell signal strength is better than said source cell signal strength plus said negative offset, a delta that is a difference between said signal strength at said target cell and said signal strength at said source cell and said UE speed.

The prohibit time may be set to a time period at which it is estimated the coverage from the source cell is no longer good enough to trigger a handover to that cell. This time period will depend on a number of factors such as the handover event condition and in particular the offset, the delta amount and the UE speed. Where all of these factors are known they may all be used in the determination of the prohibit time, alternatively a subset of these factors may be used. In other embodiments a generic prohibit time may be used.

In some embodiments, where said indication comprises an indication of the handover condition being a negative offset, then even where a delta value is positive a prohibit time may still be generated, the prohibit time may depend upon the positive delta and/or the UE speed and/or the handover condition offset.

In some example embodiments, said handover preparation information is received from an apparatus supporting providing radio coverage in said source cell. In some embodiments said handover preparation information may be received via an intermediary such as an AMF access and mobility function.

In some example embodiments, said signal strength measurements comprise RSRP Reference-Signal-Receive-Power and/or RSRQ Reference-Signal-Receive-Quality and/or SINR measurements signal to interference and noise ratio.

In some example embodiments, said handover HO preparation information is received in a Handover Request.

In some example embodiments, said prohibit time increases with a size of said delta and/or offset and decreases with a speed of said user equipment.

In some example embodiments, said handover condition comprises one of an A3 or A5 event.

In some example embodiments, said apparatus is further caused to perform: generate an information element indicating said prohibit time; and transmit said information element to said source cell.

In some example embodiments, said step of transmitting comprises transmitting said information element within an RRC Reconfiguration message. In some cases it may be included within a Handover Request acknowledge message. For example, this message may be a XnAP:HANDOVER REQUEST ACKNOWLEDGE for Xn based HO or A NGAP:HANDOVER REQUEST ACKNOWLEDGE for NG based HO.

In some example embodiments, said information element comprises an indication of a frequency band of said source cell.

According to various, but not necessarily all, example embodiments of the disclosure there is provided an apparatus comprising: at least one processor; and at least one memory storing instructions that when executed by the at least one processor cause the apparatus at least to perform: receive an indication of a prohibit time, said prohibit time being a time period following handover during which said user equipment should be impeded from performing a handover back to a source cell; during said prohibit time period not performing reporting measured signal strengths for determining whether a handover event condition is met in a source cell frequency band; determine when said time period has expired; and commence performing and reporting of said signal measurements in said source cell frequency band.

In some example embodiments, said apparatus is further caused to perform: receiving from a source cell an indication of measurement configuration for determining subsequent handover event conditions; said reporting of said signal strength measurements being as defined in said measurement configuration.

In some example embodiments, said prohibit time indication is received in a same message as said indication of said measurement configuration.

In some example embodiments, said prohibit time indication is received from said source cell prior to said handover.

In some example embodiments, said prohibit time is received within an RRC Reconfiguration message.

In some example embodiments, said RRC Reconfiguration message includes a measurement configuration comprising an indication of said source cell frequency band in which reporting of measurements is prohibited during said prohibit time.

In some example embodiments said apparatus comprises a user equipment.

According to various, but not necessarily all, example embodiments of the disclosure there is provided an apparatus for supporting providing radio coverage in a cell, comprising: at least one processor; and at least one memory storing instructions that when executed by the at least one processor cause the apparatus at least to perform: receive an indication of a prohibit time, said prohibit time being a time period following handover during which a user equipment currently served by a source cell of said apparatus should be impeded from a handover back to said source cell; and transmit said prohibit time to said user equipment.

In some example embodiments, said apparatus is further caused to perform prior to receiving said prohibit time indication: receive signal strength measurements of said source and a target cell from a user equipment; in response to determining said signal measurements meet a handover event condition, said handover event condition comprising said target cell signal strength being not less than a signal strength of said source cell by more than a predetermined offset amount; generating handover preparation information, said handover preparation information comprising an indication that said target cell has a lower signal strength than said source cell; and transmitting said handover preparation information to said target cell.

In some example embodiments, said indication of prohibit time is received within a NGAP:HANDOVER COMMAND message for NG based HO or a XnAP: HANDOVER REQUEST ACKNOWLEDGE message for Xn based HO

In some example embodiments, said indication that said target cell has a lower signal strength than said source cell comprises signal strength measurements of said signal strength at said user equipment of said source cell and said target cell.

Alternatively and/or additionally said indication may be an indication of the handover event condition that triggered the handover and that has a negative offset.

According to various, but not necessarily all, example embodiments of the disclosure there is provided a method performed at a network node supporting providing a target cell, said method comprising: receiving handover preparation information said handover being from a source cell to said target cell; and where said handover preparation information comprises an indication that said target cell has a lower signal strength than said source cell, generating an indication of a prohibit time, said prohibit time being a time period following handover during which said user equipment should be impeded from a handover back to said source cell.

In some example embodiments, said method comprises prior to generating said indication of said prohibit time, determining said prohibit time in dependence upon at least one of the following: a negative offset that is said handover is triggered when said target cell signal strength is better than said source cell signal strength plus said negative offset, a delta that is a difference between said signal strength at said target cell and said signal strength at said source cell and said UE speed.

In some example embodiments, said method further comprises generating an information element indicating said prohibit time; and transmitting said information element to said source cell.

According to various, but not necessarily all, example embodiments of the disclosure there is provided a computer program or computer program product comprising computer readable instructions which when executed by at least one processor on a network node supporting providing a target cell are operable to control said network node to perform a method described above.

According to various, but not necessarily all, example embodiments of the disclosure there is provided a method performed at user equipment, said method comprising: receiving an indication of a prohibit time, said prohibit time being a time period following handover during which said user equipment should be impeded from performing a handover back to a source cell; during said prohibit time period not performing reporting measured signal strengths for determining whether a handover event condition is met in a source cell frequency band; determining when said time period has expired; and commencing performing and reporting of said signal measurements in said source cell frequency band.

In some example embodiments, said method further comprises receiving from a source cell an indication of measurement configuration for determining subsequent handover event conditions; said reporting of said signal strength measurements being as defined in said measurement configuration.

According to various, but not necessarily all, example embodiments of the disclosure there is provided a computer program or computer program product comprising computer readable instructions which when executed by at least one processor on a user equipment are operable to control said user equipment to perform a method described above.

According to various, but not necessarily all, example embodiments of the disclosure there is provided method performed at a network node supporting a source cell, said method comprising: receiving an indication of a prohibit time, said prohibit time being a time period following handover during which a user equipment currently served by a source cell of said apparatus should be impeded from a handover back to said source cell; and transmitting said prohibit time to said user equipment.

In some example embodiments, said method further comprises, receiving said prohibit time indication: receiving signal strength measurements of said source and a target cell from a user equipment; in response to determining said signal measurements meet a handover event condition, said handover event condition comprising said target cell signal strength being not less than a signal strength of said source cell by more than a predetermined offset amount; generating handover preparation information, said handover preparation information comprising an indication that said target cell has a lower signal strength than said source cell; and transmitting said handover preparation information to said target cell.

According to various, but not necessarily all, example embodiments of the disclosure there is provided a computer program or computer program product comprising computer readable instructions which when executed by at least one processor on a network node supporting providing a source cell are operable to control said network node to perform a method described above.

According to various, but not necessarily all, example embodiments of the disclosure there is provided an apparatus for supporting providing a target cell, said apparatus comprising: means for receiving handover preparation information said handover being from a source cell to said target cell; and means for generating an indication of a prohibit time, said prohibit time being a time period following handover during which said user equipment should be impeded from a handover back to said source cell, wherein said means for generating said indication of said prohibit time is responsive to said handover preparation information comprises an indication that said target cell has a lower signal strength than said source cell, to generate said indication of said prohibit time.

According to various, but not necessarily all, example embodiments of the disclosure there is provided a user equipment comprising: means for receiving an indication of a prohibit time, said prohibit time being a time period following handover during which said user equipment should be impeded from performing a handover back to a source cell; means for determining when said time period has expired; means for reporting measured signal strengths for determining whether a handover event condition is met in a source cell frequency band; said means for reporting being inhibited from reporting during said prohibit time and commencing performing and reporting of said signal measurements in said source cell frequency band in response to said means for determining determining said prohibit time period has expired.

According to various, but not necessarily all, example embodiments of the disclosure there is provided an apparatus supporting a source cell, said apparatus comprising: means for receiving an indication of a prohibit time, said prohibit time being a time period following handover during which a user equipment currently served by a source cell of said apparatus should be impeded from a handover back to said source cell; and means for transmitting said prohibit time to said user equipment.

The means may perform the optional features set out in relation to the apparatus mentioned above.

According to various, but not necessarily all, example embodiments of the disclosure there is provided an apparatus for supporting providing a target cell, said apparatus comprising: circuitry configured to receive handover preparation information said handover being from a source cell to said target cell; and circuitry configured to generate an indication of a prohibit time, said prohibit time being a time period following handover during which said user equipment should be impeded from a handover back to said source cell, wherein said circuitry configured to generate said indication of said prohibit time is responsive to said handover preparation information comprises an indication that said target cell has a lower signal strength than said source cell, to generate said indication of said prohibit time.

According to various, but not necessarily all, example embodiments of the disclosure there is provided a user equipment comprising: circuitry configured to receive an indication of a prohibit time, said prohibit time being a time period following handover during which said user equipment should be impeded from performing a handover back to a source cell; circuitry configured to determine when said time period has expired; means for reporting measured signal strengths for determining whether a handover event condition is met in a source cell frequency band; said means for reporting being inhibited from reporting during said prohibit time and commencing performing and reporting of said signal measurements in said source cell frequency band in response to said circuitry configured to determine determining said prohibit time period has expired .

According to various, but not necessarily all, example embodiments of the disclosure there is provided an apparatus supporting a source cell, said apparatus comprising: circuitry configured to receive an indication of a prohibit time, said prohibit time being a time period following handover during which a user equipment currently served by a source cell of said apparatus should be impeded from a handover back to said source cell; and circuitry configured to transmit said prohibit time to said user equipment.

The circuitry may be configured perform the optional features set out in relation to the apparatus mentioned above.

According to various, but not necessarily all, example embodiments of the disclosure there is provided a non-transitory computer readable medium comprising program instructions stored thereon for performing at least the following: receiving handover preparation information said handover being from a source cell to said target cell; and where said handover preparation information comprises an indication that said target cell has a lower signal strength than said source cell, generating an indication of a prohibit time, said prohibit time being a time period following handover during which said user equipment should be impeded from a handover back to said source cell.

According to various, but not necessarily all, example embodiments of the disclosure there is provided a non-transitory computer readable medium comprising program instructions stored thereon for performing at least the following: receiving an indication of a prohibit time, said prohibit time being a time period following handover during which said user equipment should be impeded from performing a handover back to a source cell; during said prohibit time period not performing reporting measured signal strengths for determining whether a handover event condition is met in a source cell frequency band; determining when said time period has expired; and commencing performing and reporting of said signal measurements in said source cell frequency band.

According to various, but not necessarily all, example embodiments of the disclosure there is provided a non-transitory computer readable medium comprising program instructions stored thereon for performing at least the following: receiving an indication of a prohibit time, said prohibit time being a time period following handover during which a user equipment currently served by a source cell of said apparatus should be impeded from a handover back to said source cell; and transmitting said prohibit time to said user equipment.

The instructions may be for performing the optional features set out in relation to the method mentioned above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1A - C schematically illustrates different handover triggering points;
Fig. 2 schematically shows signalling in an Xn based handover embodiment;
Fig. 3 schematically shows signalling in a NG based handover embodiment;
Figs 4A - D schematically shows signalling in an Xn based handover embodiment in detail;
Fig. 5 schematically shows a user equipment moving through a communication network according to an embodiment;
Fig. 6 shows a flow diagram schematically illustrating steps in a method performed at a target node according to an embodiment;
Fig. 7 shows a flow diagram schematically illustrating steps in a method performed at a source node according to an embodiment;
Fig. 8 shows a flow diagram schematically illustrating steps in a method performed at a user equipment according to an embodiment; and
Figs 9 to 13 show examples of the format of messaging of embodiments.

### DETAILED DESCRIPTION

Before discussing the example embodiments in any more detail, first an overview will be provided.

The application is concerned principally with the situation where there are many UEs that need to handover at the same time and particularly where the UEs are travelling at a fast speed, so that the time in which a handover is to be performed, that is the time between the handover condition (A3 or A5 event for example) being met and coverage in the serving or source cell being lost is quite short. This problem may arise at cell boundaries on railway lines, or highways.

One way of addressing this would be to change the criteria for the handover event so that it is met earlier, that is before the target cell is better than the source cell, this would allow a longer time to handover in before the source cell coverage is lost. A drawback of this is that there is an increased likelihood of ping pong from the target cell back to the source cell.

This application addresses this problem by providing a time period after handover during which handover back to the source cell is prohibited. This may be done by stopping the UE from sending measurement reports in a frequency band of said source cell to its serving cell during this period. The time period is chosen to be the period during which the source cell signal strength measurements might trigger a handover back to this cell. This period is dependent on the UE speed and the offset in the handover condition criteria, that is the difference between source and target cell signal strengths at which handover preparations are triggered. It is also dependent on the difference in signal strengths between the target and source cell at the point that the handover is triggered or occurs.

As set out briefly above, for specific use cases (such as high speed trains or numbers of cars travelling along highways), where significant number of users located in the same area are traveling the same, predefined direction, it may be challenging to assure service continuity for all the users, due to processing power limitations offered by the source and target cells engaged in the handover process (finite number of handovers can be processed within certain period). The problem will be amplified in the future when the number of network devices will highly increase (e.g. wearables, RedCap (reduced capacity) devices, intelligent cars etc.)
- One aspect of the problems is the requirement to suddenly process huge number of handover requests caused by the train/bus (tens to hundreds of passengers) or a vehicle (having multiple loT devices on board).
- Another aspect of the problem is the high speed of the devices, imposing very tight requirements on handover timing
- Yet another aspect is that the standardized handover event is based on the principle that the UE crosses the handover threshold - typically because the neighbour cell becomes better than the serving one, and that this state is maintained for some time (Time to Trigger). This causes two difficulties:
   ∘ The target cell has to be better than the serving one (might not be technically better if the negative offset is applied, but the principle is that the target cell goes above a certain threshold)
   ∘ The Time to Trigger can't be too long due to high speed
- On top of the two previous points - if handover would be triggered to worse cell, unwanted ping-pong effect (back handover) would be observed, introducing even higher signalling load related to handover procedures

As a result it could happen that for a number of users the connection would be dropped due to lack of processing power by the base station.

Embodiments described below propose ways for avoiding or at least impeding the back handover in case of handover to a worse cell.

Existing legacy A3/A5 based measurement events can be configured to trigger handovers to a worse cell, therefore it is proposed that, in order to avoid unwanted ping-pong effect in a target cell, the back handover for the UE is prohibited for a certain time period following the handover- the assumption is that the period should be long enough for the UE to move out of coverage of the source cell.

Due to handover to worse cell (executed early, perhaps just when entering the coverage of the target cell), cumulative time for execution of possible handovers between cells is increased, which extension of time may be crucial for users travelling in single group, in the same direction, at the same time. As a result base station transceiver BTS processing due to huge amount of simultaneously executed handovers can be offloaded (stretched) in time domain and the number of dropped users may be significantly decreased.

Legacy mobility events (prior to 3GPP Rel.16) have long been used to provide intra-frequency, inter-frequency and inter-RAT mobility. The proposed idea is based on the use - and possible extension - of the A3 or A5 mobility events (relevant both to LTE and NR).
- Event A3 (Neighbour becomes offset better than SpCell (special cell))
- Event A5 (Serving becomes worse than threshold, Neighbour becomes better than threshold)

Where Off component is the offset between target and source. And for HO to worse cell Off will take negative value; the range of Off (a3Offset) is -15dB...15dB, step 0.5dB

It may be that the network covering the highways and the railways in a given country are using a single frequency layer, although the application is not limited to this. However, this is very often the case and thus, embodiments, focus on intra-frequency handover cases for simplicity sake, but the principle can be extended to any type of handover.

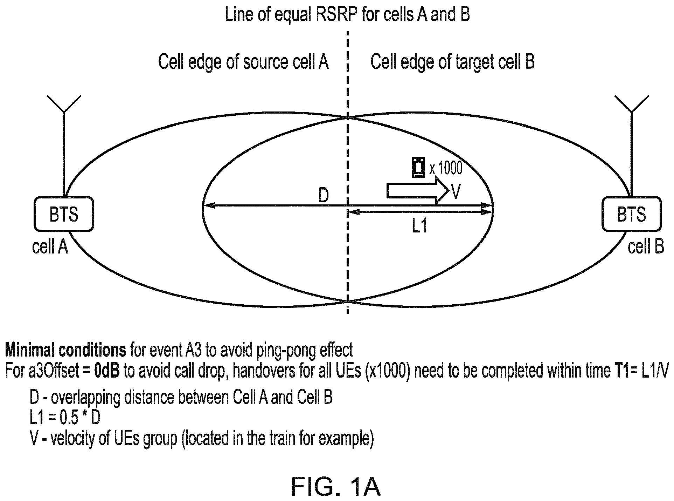

Current behaviour for event A3 based mobility is illustrated in Figs. 1A - C.

In Fig. 1A handover initiation is triggered when the signal strength of the source cell (cell A) is equal to the signal strength of the target cell (cell B). If handover initiation is triggered here then in order for service not to be lost, it must be completed before radio coverage from the source cell is lost. Thus, the time for handover to occur is T1= L1/v, where L1 = D/2 that is half the diameter of the cell overlap and v is the velocity of the UE. As the trajectory of the UE is known and handover is only initiated when the target cell is better than the source cell ping pong will not occur.

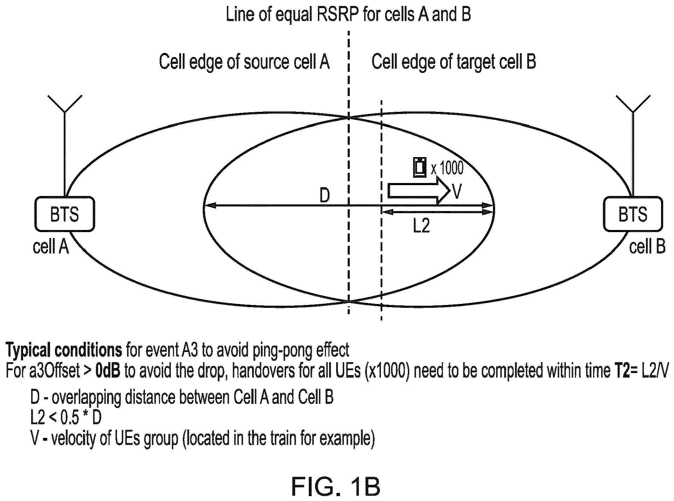

Fig. 1B shows an alternative example where handover initiation is triggered when the target cell is a certain offset better than the source cell, this scenario is even safer with respect to possible ping pong but has a shorter time in which to perform the handover. In this case the time available for handover before service is dropped is T2=L2/v where L2 < 0.5XD. So the time is shorter.

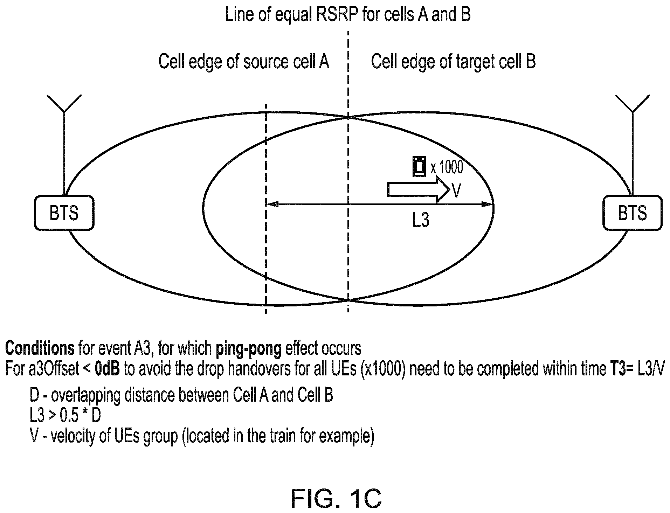

Fig. 1C shows a further alternative where handover is initiated early when the signal from the target cell is worse than the signal from the source cell, by a predetermined negative offset. In this case handover needs to be completed by T3 = L3/v, where L3 > D. So there is a longer time in which handover can occur, but as the signal strength from the target cell is less than the signal strength from the source cell when handover is initiated, the risk of ping pong back to the source cell is high.

The option of Fig. 1C from better cell A to worse cell B provides the longest available time for a handover of the three examples and is therefore the most promising option in the context of cumulative time offered by the system for possible handovers, which may be required in particular, where there are a group of UEs, travelling in the same direction, at the same time. For a given processing resources, execution of handovers can be distributed in time because T3 > T1 > T2.

However, ping pong then becomes a very real possibility and embodiments propose a solution for avoiding or at least reducing ping-pong effect for handovers to a worse cell, in which a prohibit time is provided during which a handover back towards the source cell is inhibited, the prohibit time being a time during which it is estimated that the UE will have travelled beyond an area where the signal strength of the source cell relative to the target (current serving cell) is sufficient to trigger a handover.

When RRC Measurement Report is sent for event A3 or event A5 and reported RSRP/RSRQ levels of source and target cells indicate handover to worse cell (absolute RSRP/RSRQ of target cell is worse than absolute RSRP/RSRQ of source cell by an amount that is equal to a negative delta) the source gNB/cell reports the negative RSRP/RSRQ delta to the target gNB/cell. Optionally UE speed could also be reported. (The method how to get UE speed information is not in the scope of this application).

Target gNB/cell uses these two factors (negative delta and UE speed) to determine the period within which handover from target gNB/cell across the same frequency layer is prohibited. The determined prohibit time may then be signaled to the source cell and from there to the UE prior to handover. After handover from source cell to worse target cell, measurement configuration for event A3 or A5 are provided to the UE served by target cell, but the UE can utilize them only after expiry of prohibit time also provided. The assumption is that the prohibit time should be long enough for the UE to move out of coverage of the source cell.

Selected prohibit time is a function of
- negative delta (the bigger negative delta the longer prohibit time is required)
- UE speed (the higher UE speed velocity the shorter prohibit time is required)

Alternatively and/or additionally, the negative offset value that is indicative of how early the handover may be triggered, may be used in the determination of the prohibit time.

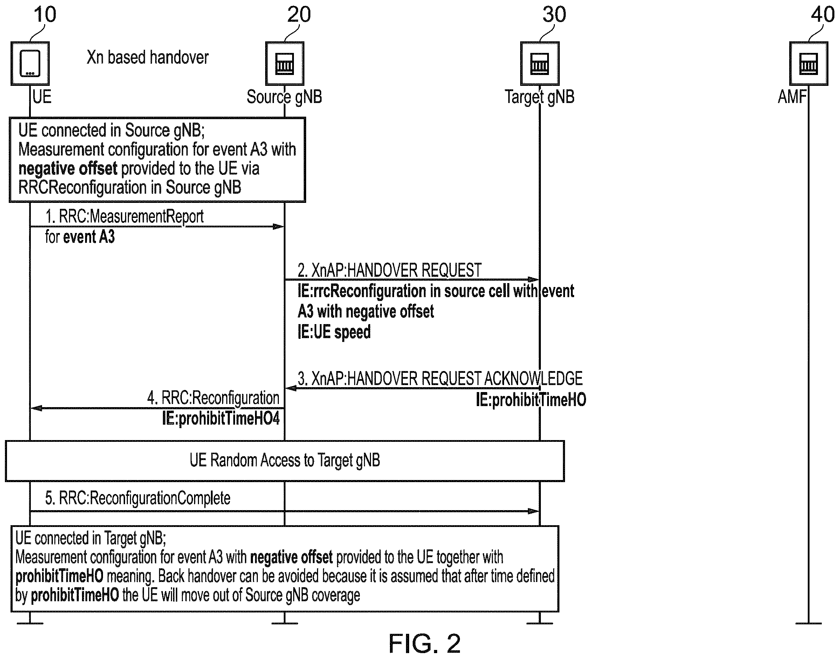

Fig. 2 schematically shows signalling in an Xn based handover embodiment that is a handover when messages between the two networks nodes are sent directly over the Xn interface between them. In this embodiment, UE 10 is initially connected to source node 20 and has received measurement configuration for a handover event A3 with a negative offset. This has been provided to the UE10 via an RRCreconfiguration message from the source node 20. A measurement configuration for event A3 with negative offset is one where a handover will be triggered where the target node signal strength is worse than the source node signal strength provided it is not worse by more than this offset value.

The UE generates and transmits as signal 1 an RRC measurement report relevant for event A3 to the source node 20. When the source node 20 determines from the received measurement report, which includes signal strength measurements at the UE 10 of both the source and target cell, that the handover condition event A3 is met, it generates and transmits a handover request signal, signal 2. Signal 2 includes an information element indicating the event A3 and the negative offset and in some cases the UE speed. In some cases, it may include the measurement report indicating the signal strengths received from UE10.

The target node 30 will then determine a prohibit time from the received information and will generate a handover request acknowledge and transmit this as signal 3. This will include an information element which includes the prohibit time indicative of the time following handover during which the UE should not perform a handover to the source cell 20. Source cell 20 then generates and transmits a signal 4 which is a RRC reconfiguration signal with an information element indicating the prohibit time for the handover.

The UE performs random access to the target node 30 and connects to the target cell and transmits a RRC reconfiguration complete signal at 5. During the reconfiguration process the UE has received measurement configuration for event A3 with negative offset for a subsequent handover together with the prohibit time information indicating a time period during which it should not report measurements for cells at the frequency band of the source cell and in this way, a handover back to the source cell during this prohibit time is inhibited. This prohibit time is selected such that the UE will move out of range of the source cell by the time it can again perform or at least report measurements in this frequency band.

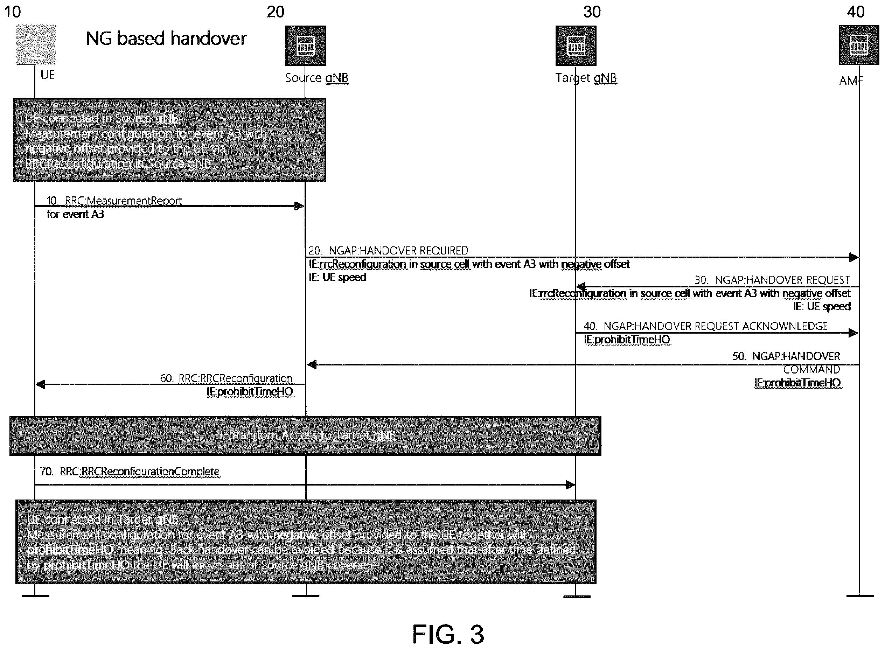

Fig.3 shows a NG new generation, based handover according to an embodiment. In this embodiment as for the previous embodiment it starts with the UE being connected to the source node in this case gNB 20 and being configured for event A3 measurements with a negative offset, this being provided to the UE 10 via the RRC reconfiguration from the source gNB 20.

Signal 10 is generated and transmitted by UE 10 to the source gNB 20, this signal indicates the RRC measurement report for the event A3, that is the signal strengths of the source and target cells. Where the source gNB 20 determines that the signal strengths indicate that the handover is to be triggered then it will generate and transmit a signal 20 which is a NGAP; HANDOVER REQUIRED signal which will be transmitted to AMF access and mobility function 40. The HANDOVER REQUIRED signal 20 may comprise the event A3 with negative offset information and an information element indicative of the UE speed and in some cases the measurement report indicating the signal strengths of the source and target cells at the UE10.

In response to this the AMF 40 generates and transmits at signal 30 a NGAP HANDOVER REQUEST which includes an information element with an RRC reconfiguration indicative of the event A3 with a negative offset and an information element with the UE speed. In some cases it also includes the signal strength measurements.

In response to this the target gNB 30 will determine the prohibit time which may depend on one or more of the event A3 negative offset, the UE speed and the signal strength measurement and will transmit this in an information element within an NGAP HANDOVER REQUEST acknowledgment to the AMF 40. In response to this the AMF 40 will generate a NGAP handover command which includes the information element with the prohibit time and transmit it as signal 50 to the serving cell 20 which will forward it as an RRC reconfiguration with the prohibit time information element as a signal 60. The UE will then perform a random access to the target gNB 30 and transmit an RRC reconfiguration complete signal when this is complete at signal 70. The UE 10 is then connected to the target gNB 30 and during the prohibit time will not perform or at least not report measurements in the frequency band of the source cell 20. In this way handovers back to the source cell are prohibited. It should be noted that the signals 40, 50 with the information elements regarding the prohibit time that are sent from the target gNB 30 to the AMF 40 and from there to the source node 20 are transparent containers and the AMF does not process this information.

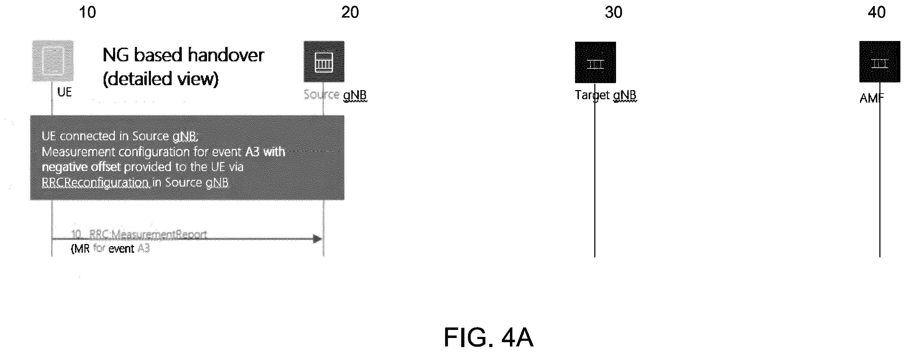

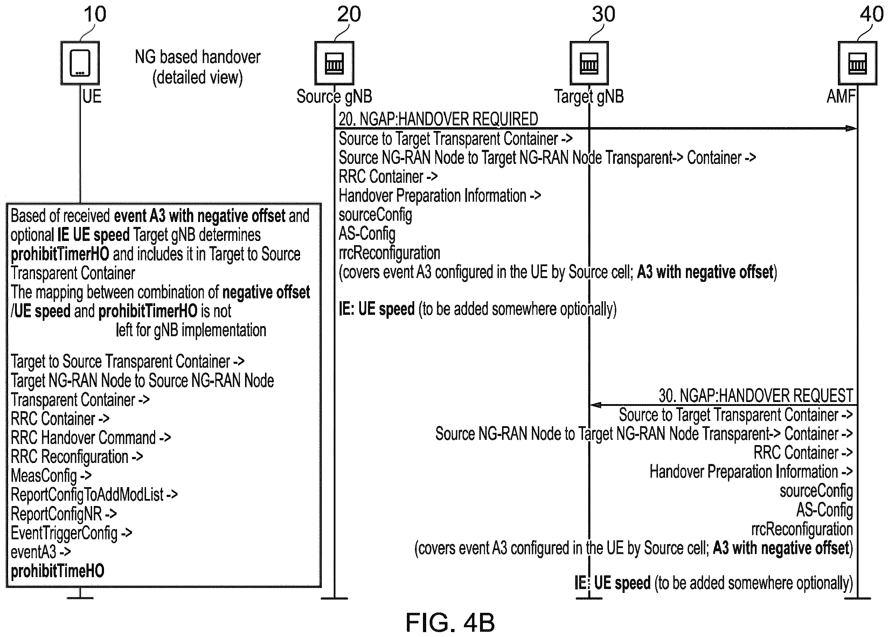

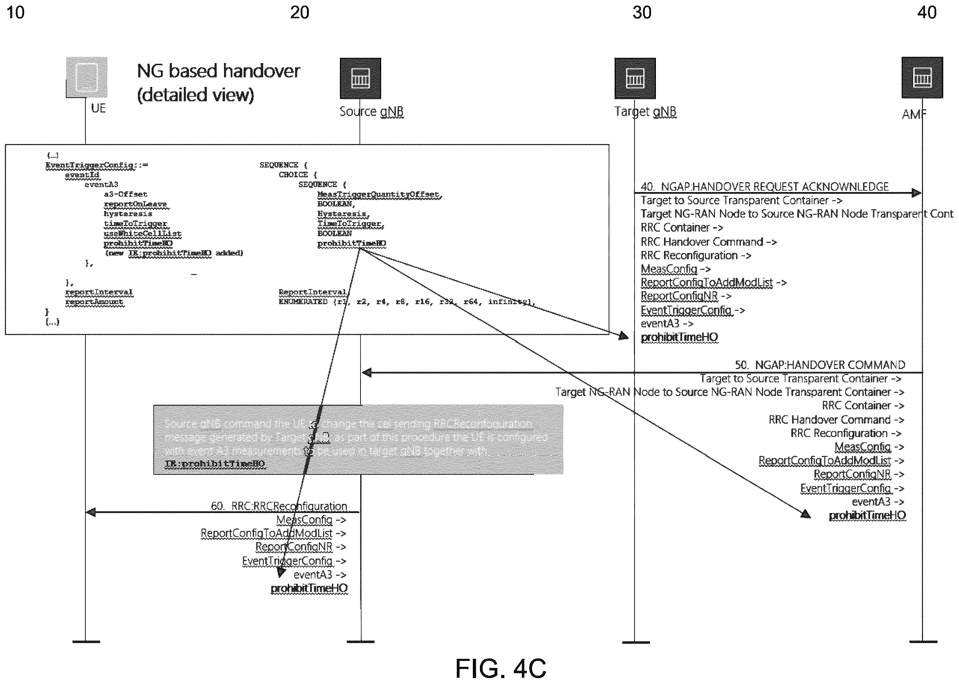

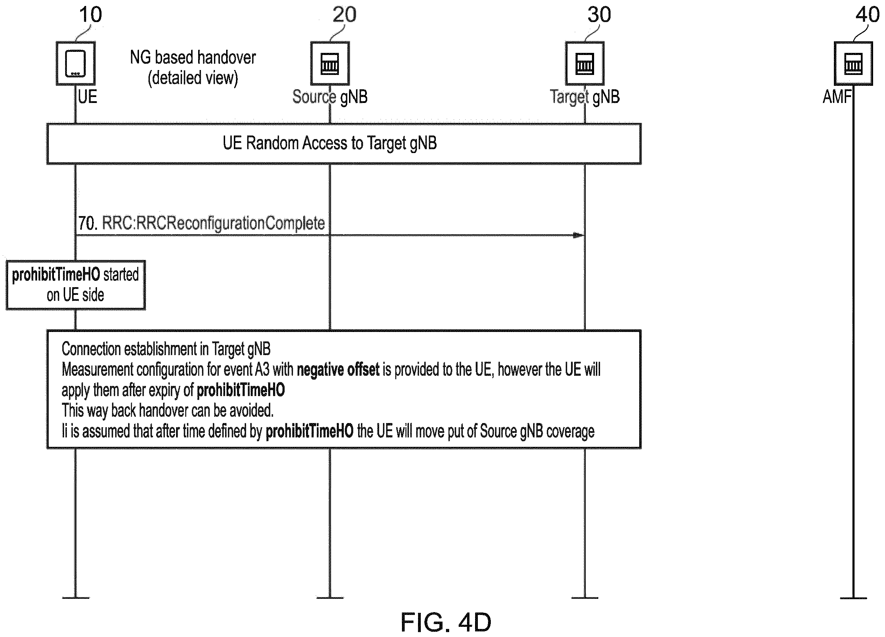

Fig.4 A to D show this NG based handover in more detail. Fig.4A shows the initial RRC measurement report signal 10. Fig.4B shows the signalling 20 and 30 in more detail, while Fig.4C shows the signalling 40 to 60 and how the new information element IE with the prohibit time for the handover is generated by the target gNB 30 and sent initially in a transparent container via signal 40 to the AMF 40. The AMF 40 sending it back in a transparent container within signal 50 to the source gNB 20 which sends it with the handover information in RRCreconfiguration signal 60 to UE 10. Fig.4D shows how the UE 10 will complete the handover by performing a random access to the target gNB 30 and transmit a RRC reconfiguration complete signal 70 and then start a timer for a prohibit time period during which time period the UE will not report any measurements in the frequency band of the source gNB 20.

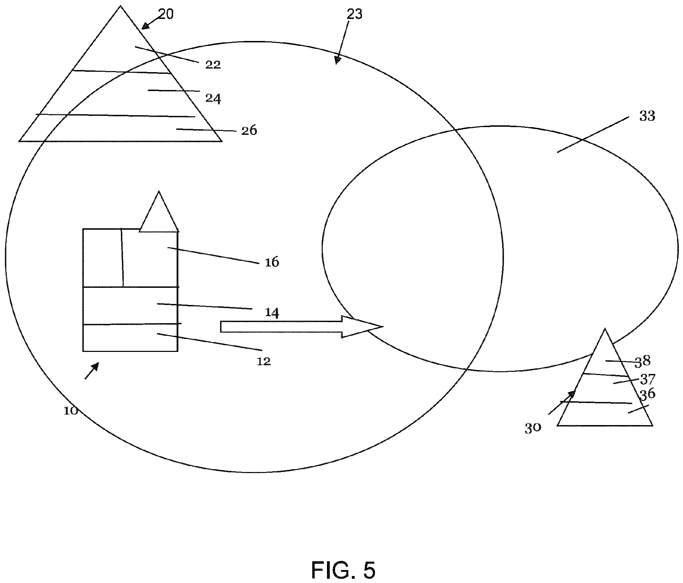

Fig. 5 schematically shows UE 10 moving from a source cell 23 supported by source node 20 towards target cell 33 supported by target node 30. UE 10 comprises one or more processors 12, one or more data stores 14 and a transceiver 16. Source node 20 comprises a transceiver 22, one or more processors 24 and one or more data stores 26. Target node 30, comprises a transceiver 38, one or more processors 36 and one or more data store 37. It should be noted that the target node is a target node for UE 10, but may be a source or serving node for other UEs. Similarly source or service node 20 may be a target node for other UEs, thus, these nodes may be configured with the functionality of a both a target and source node according to embodiments.

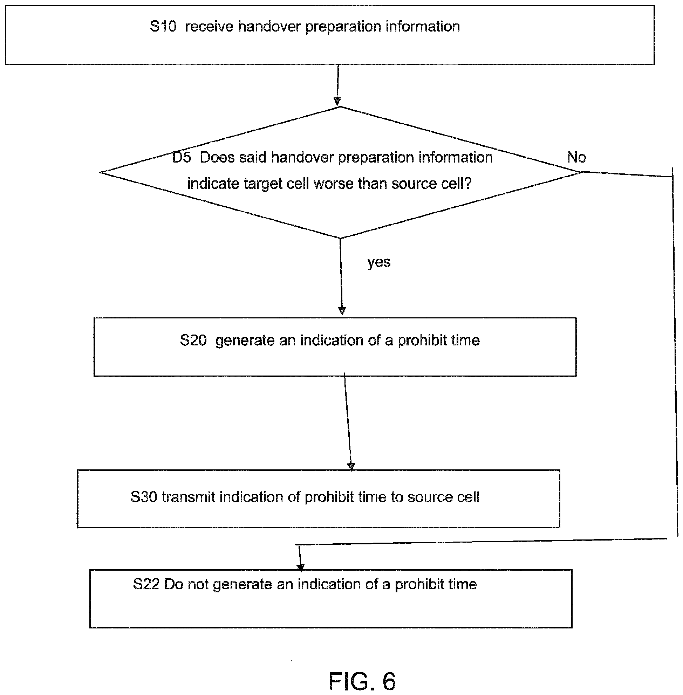

Fig. 6 shows a flow diagram schematically illustrating steps in a method performed at a target node according to an embodiment. At step S10 handover preparation information is received, this is received from a source node (in some cases via the AMF). This handover preparation information may comprise an indication of UE speed, the handover event condition and in some cases, the measurement report of source and target signal strengths as measured by the UE. The target node will determine from one or more of the following: the measurement report and the handover event condition if the target cell is indicated to be worse than the source cell at D5 . If it is then it will generate an indication of a prohibit time at step S20. This will be the time during which a UE will be prohibited from handover back to the source cell. The target cell may generate this in dependence upon the UE speed, the event condition and/or the measurement report. The faster the UE speed, the smaller the prohibit time, while the larger the negative offset, or negative delta the larger the prohibit time. Then at step S30 the target cell will transmit an indication of the prohibit time to the source cell, this may be done directly or via an AMF. If the target cell is not indicated to be worse than the source cell then no prohibit time will be generated (step S22), and handover will proceed in a conventional manner without a prohibit time indication being generated and transmitted.

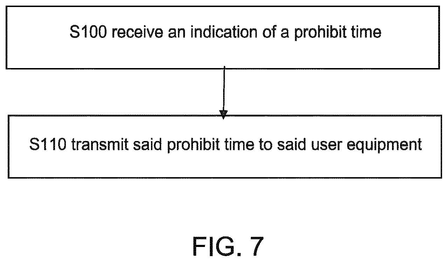

Fig. 7 shows a flow diagram schematically illustrating steps in a method performed at a source node according to an embodiment. The source node receives at step S100 an indication of a prohibit time. This may come from the target node, perhaps via an AMF. At step S110 it transmits this prohibit time to a user equipment in a RRC reconfiguration message during handover preparations.

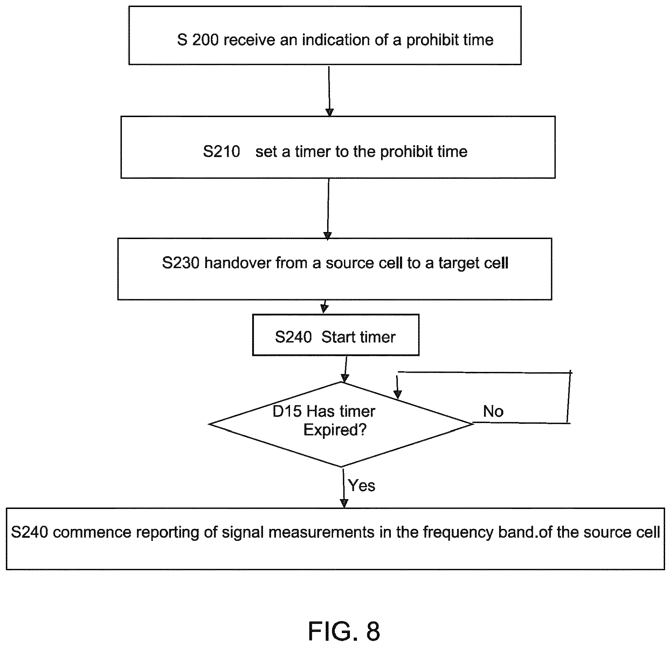

Fig. 8 shows a flow diagram schematically illustrating steps in a method performed at a user equipment according to an embodiment. At step S200 the UE receives an indication of a prohibit time, this is received in a RRC reconfiguration message during handover preparations to a target cell. At step S210 the UE sets a timer to the prohibit time. At step S230, the UE performs a handover to the target cell. At step S240 the UE starts the timer, and when at D15 it is determined to have expired, the UE at step S240 commences reporting of signal measurements in the frequency band of the source cell. In this way a handover to the source cell is inhibited during the prohibit time.

It should be noted that embodiments may require changes in NGAP, XnAP, RRC messages
3GPP 38.413 for inter-gNB, NG based handover
- 3GPP 38.423 for inter-gNB, Xn based handover
- 3GPP 38.331 for inter-gNB, X2 based, S1 based handovers and intra-gNB handovers

Embodiments require changes on UE terminal side, which should handle new prohibit time provided by the network.

Possible 3GPP implementation changes:
- 3GPP 38.413 - NG based handover

Negative RSRP/RSRQ delta and UE speed can be reported as a new optional lEs to the target cell in **RRC Handover Preparation Information,** which for NG based HO is included in **NGAP: Handover Required** and **NGAP: Handover Request** messages in **Source to Target Transparent Container -> Source NG-RAN Node to Target NG-RAN Node Transparent Container -> RRC Container**

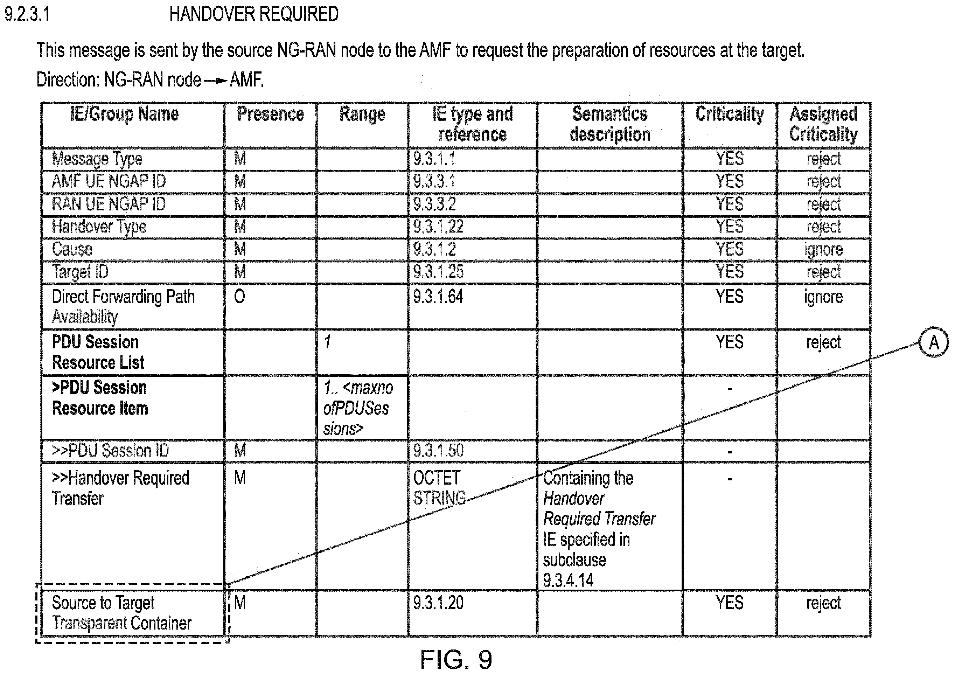

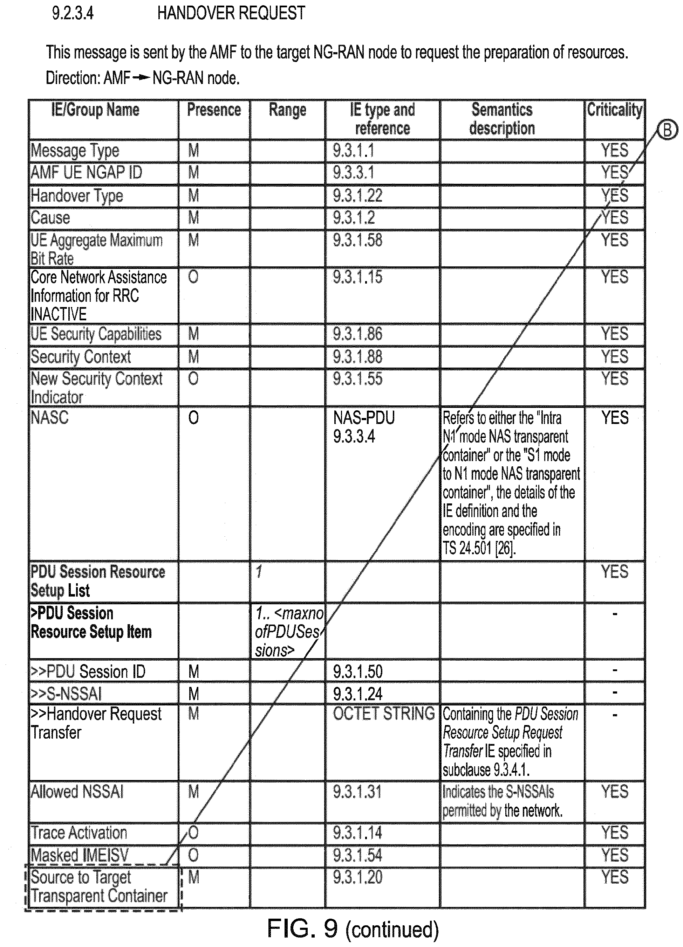

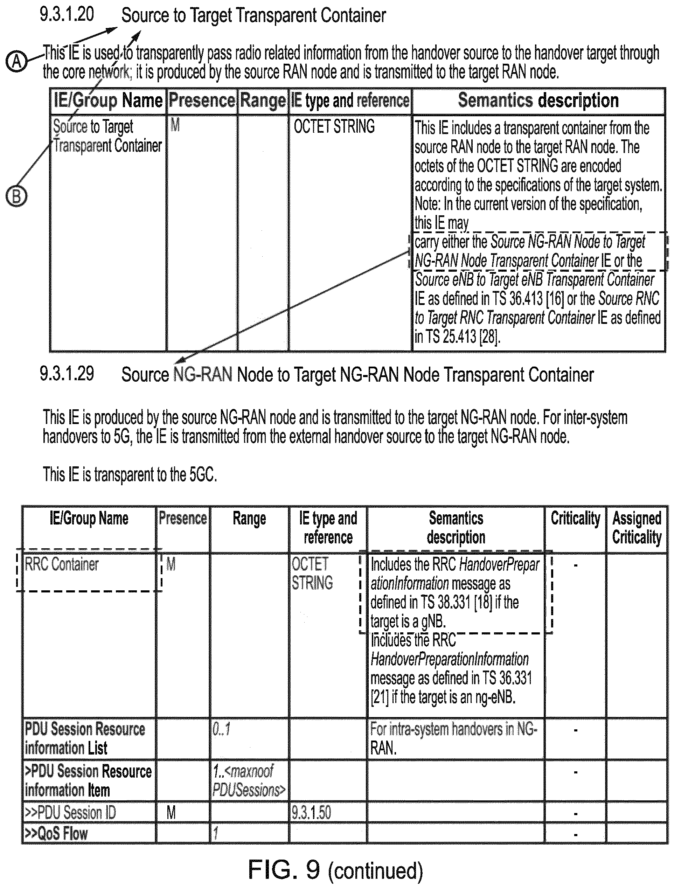

Examples of the format that these changes in messaging may take is shown in Fig. 9.

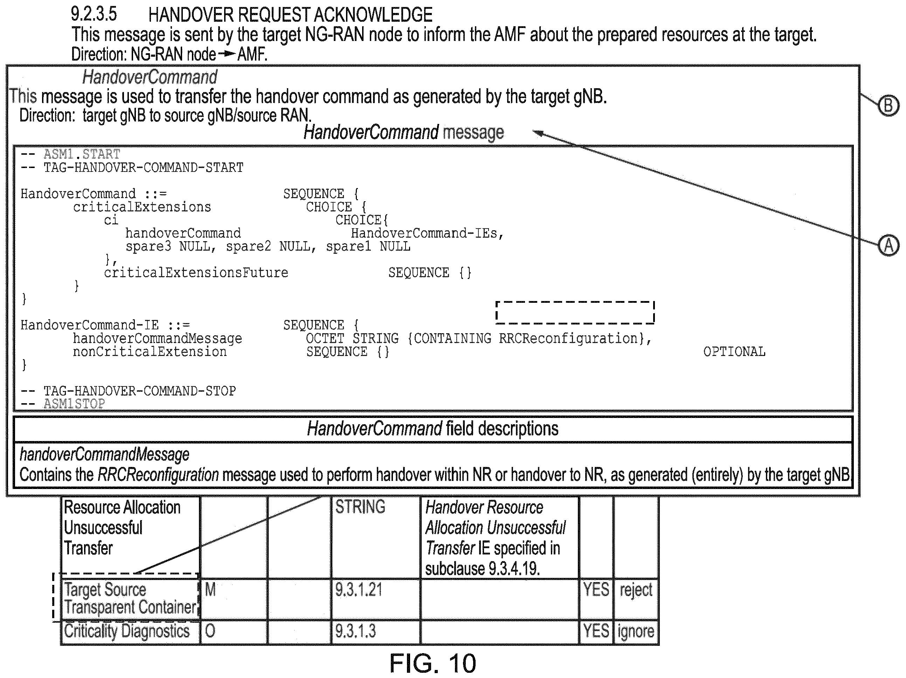

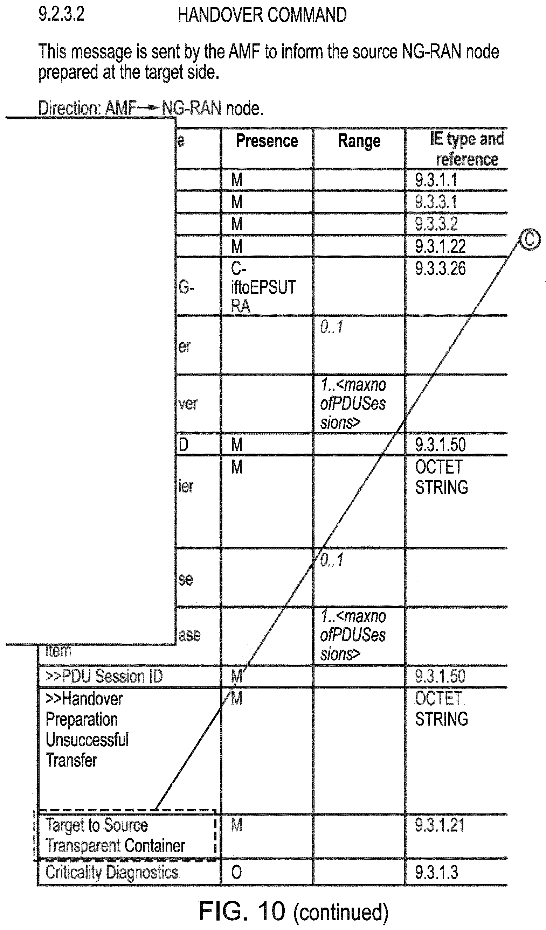

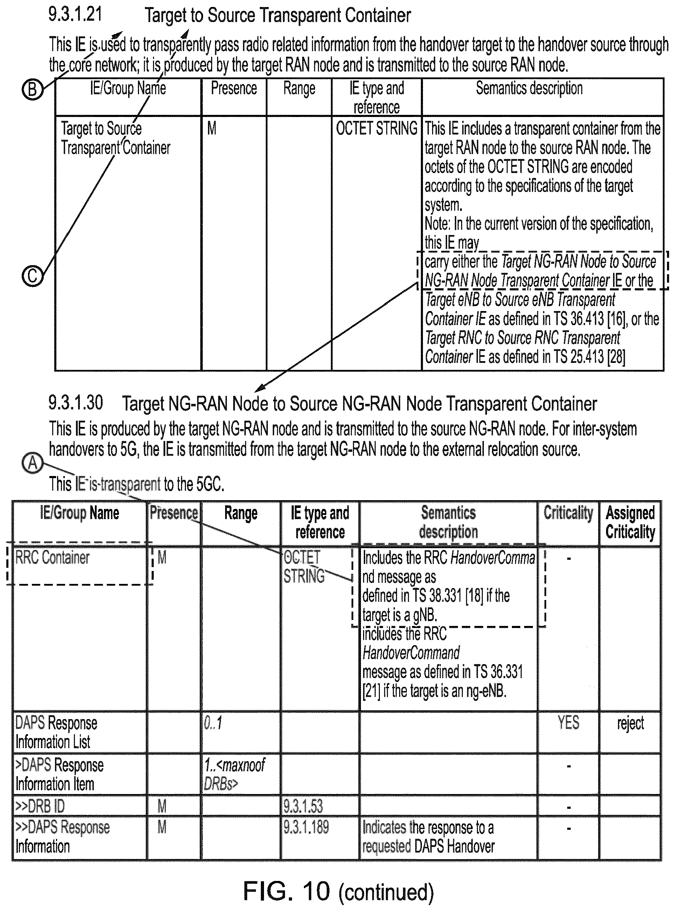

**Prohibit time** can be sent as a new optional IE in **RRC Reconfiguration** message generated by target cell and included within **RRC Handover Command** message, which for NG based HO is included **NGAP: Handover Request Acknowledge** and **NGAP: Handover Command** messages in **Target to Source Transparent Container -> Target NG-RAN Node to Source NG-RAN Node Transparent Container -> RRC Container** Examples of the format that these changes in messaging may take is shown in Fig. 10.
- 3GPP 38.423 Xn based handover

Negative RSRP/RSRQ delta and UE speed can be reported as new optional lEs to the target cell in **RRC Handover Preparation Information,** which for Xn based HO is included **XnAP: Handover Request** in **UE Context Information -> RRC Context**

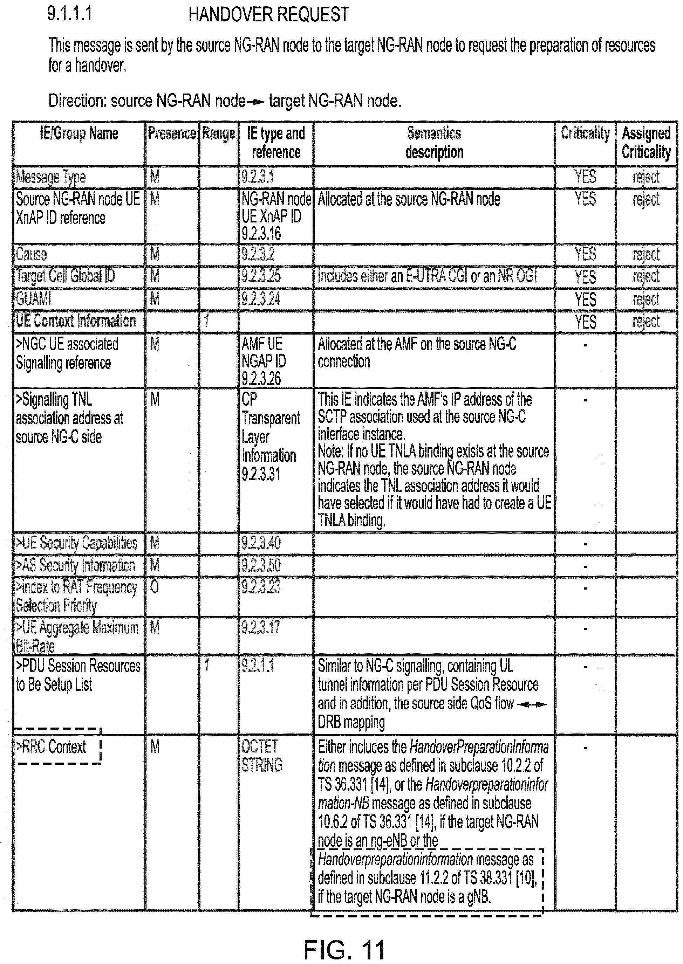

Examples of the format that these changes in messaging may take is shown in Fig. 11.

**Prohibit time** can be sent as a new optional IE in **RRC Reconfiguration** message generated by target cell and included within **RRC Handover Command** message, which for Xn based HO is included **XnAP: Handover Request Acknowledge** in **Target NG-RAN Node to Source NG-RAN Node Transparent Container**

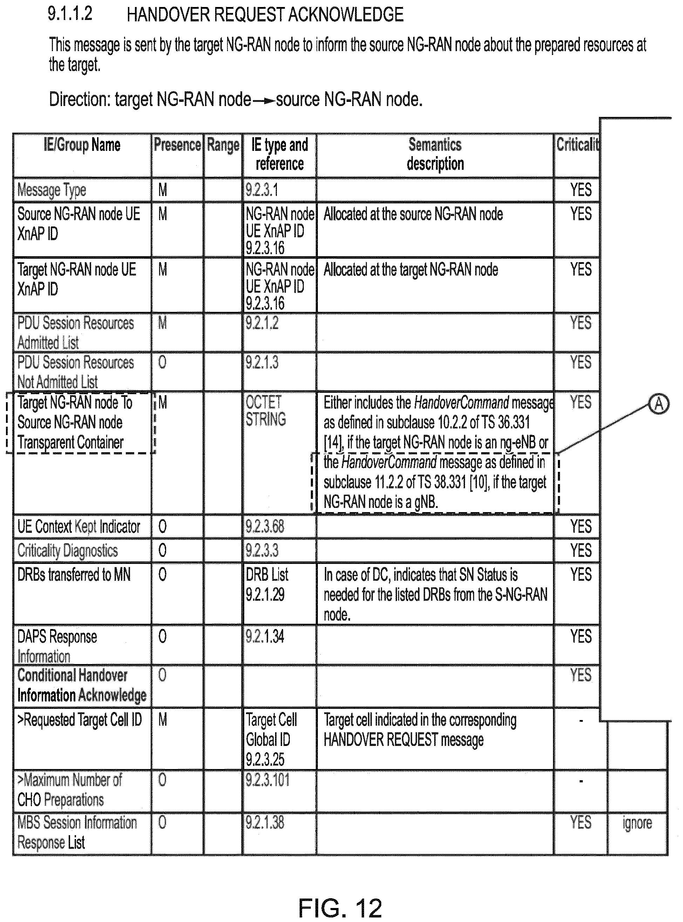

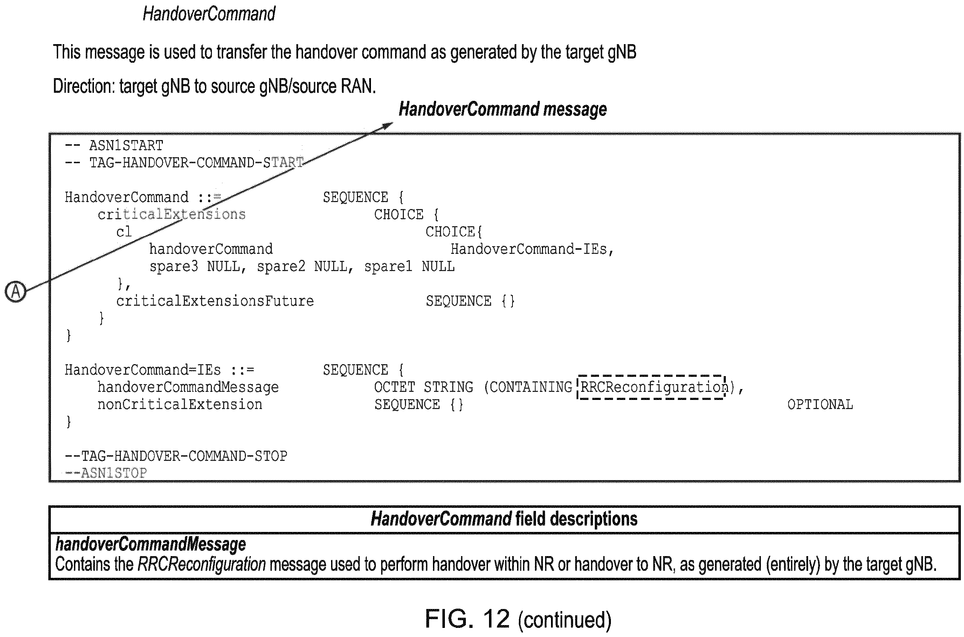

Examples of the format that these changes in messaging may take is shown in Fig. 12.
- 3GPP 38.331

**Prohibit time** can be signalled by target cell as a new **IE:prohibitTimerHO** to the UE in **RRCReconfiguration** as part of **reportConfigNR -> EventTriggerConfig -> eventA3** and **eventA5**

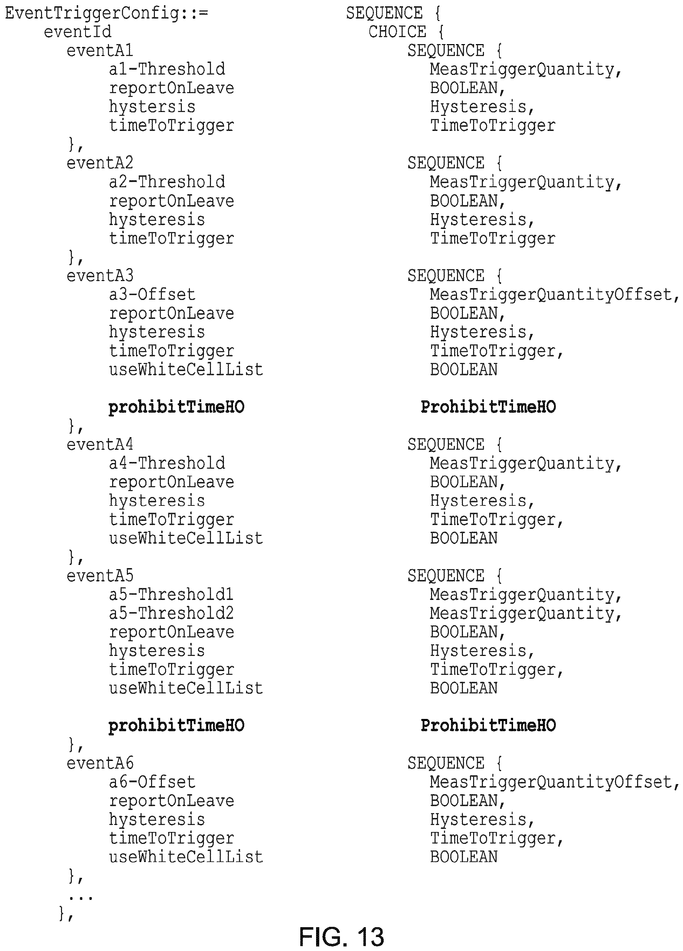

Examples of the format that these changes in messaging may take is shown in Fig. 13.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

The user equipment refers to any mobile end or terminal device that may be capable of wireless communication. By way of example rather than limitation, user equipment UE may also be referred to as a communication device, a terminal device, a Mobile Station (MS). The user equipment may include, but is not limited to, a mobile phone, a cellular phone, a smart phone, a tablet, a wearable terminal device, a personal digital assistant (PDA) , vehicle-mounted wireless terminal devices, smart devices etc.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising:
at least one processor; and
at least one memory storing instructions that when executed by the at least one processor cause the apparatus at least to perform:
receive handover preparation information said handover being from a source cell to a target cell said apparatus supporting coverage in said target cell; and
where said handover preparation information comprises an indication that said target cell has a lower signal strength than said source cell;
generate an indication of a prohibit time, said prohibit time being a time period following handover during which said user equipment should be impeded from a handover back to said source cell.

2. An apparatus according to claim 1, wherein said indication comprises an indication of a handover condition triggering said handover, said handover condition comprising a negative offset, that is said handover is triggered when said target cell signal strength is greater than said source cell signal strength plus said negative offset.

3. An apparatus according to claim 1 or 2, wherein said indication comprises an indication of a difference between said signal strength at said target cell and said signal strength at said source cell being a delta amount and said delta amount being negative.

4. An apparatus according to any preceding claim, wherein said handover preparation information comprises a UE speed.

5. An apparatus according to any preceding claim, wherein said prohibit time is determined in dependence upon at least one of the following: a negative offset that is said handover is triggered when said target cell signal strength is better than said source cell signal strength plus said negative offset, a delta that is a difference between said signal strength at said target cell and said signal strength at said source cell and said UE speed.

6. An apparatus according to any preceding claim, wherein said apparatus is further caused to perform:
generate an information element indicating said prohibit time; and
transmit said information element to said source cell.

7. An apparatus, comprising:
at least one processor; and
at least one memory storing instructions that when executed by the at least one processor cause the apparatus at least to perform:
receive an indication of a prohibit time, said prohibit time being a time period following handover during which said user equipment should be impeded from performing a handover back to a source cell;
during said prohibit time period not performing reporting measured signal strengths for determining whether a handover event condition is met in a source cell frequency band;
determine when said time period has expired; and
commence performing and reporting of said signal measurements in said source cell frequency band.

8. An apparatus according to claim 7, said apparatus being further caused to perform: receiving from a source cell an indication of measurement configuration for determining subsequent handover event conditions;
said reporting of said signal strength measurements being as defined in said measurement configuration.

9. An apparatus according to claim 8, wherein said prohibit time indication is received in a same message as said indication of said measurement configuration.

10. An apparatus according to claim 8 or 9, wherein said prohibit time indication is received from said source cell prior to said handover.

11. An apparatus for supporting providing radio coverage in a cell, comprising:
at least one processor; and
at least one memory storing instructions that when executed by the at least one processor cause the apparatus at least to perform:
receive an indication of a prohibit time, said prohibit time being a time period following handover during which a user equipment currently served by a source cell of said apparatus should be impeded from a handover back to said source cell; and
transmit said prohibit time to said user equipment.

12. An apparatus according to claim 11, wherein said apparatus is further caused to perform prior to receiving said prohibit time indication:
receive signal strength measurements of said source and a target cell from a user equipment;
in response to determining said signal measurements meet a handover event condition, said handover event condition comprising said target cell signal strength being not less than a signal strength of said source cell by more than a predetermined offset amount;
generating handover preparation information, said handover preparation information comprising an indication that said target cell has a lower signal strength than said source cell; and
transmitting said handover preparation information to said target cell.

13. A method performed at a network node supporting providing a target cell, said method comprising:
receiving handover preparation information said handover being from a source cell to said target cell; and
where said handover preparation information comprises an indication that said target cell has a lower signal strength than said source cell, generating an indication of a prohibit time, said prohibit time being a time period following handover during which said user equipment should be impeded from a handover back to said source cell.

14. A method performed at user equipment, said method comprising:
receiving an indication of a prohibit time, said prohibit time being a time period following handover during which said user equipment should be impeded from performing a handover back to a source cell;
during said prohibit time period not performing reporting measured signal strengths for determining whether a handover event condition is met in a source cell frequency band;
determining when said time period has expired; and
commencing performing and reporting of said signal measurements in said source cell frequency band.

15. A method performed at a network node supporting a source cell, said method comprising:
receiving an indication of a prohibit time, said prohibit time being a time period following handover during which a user equipment currently served by a source cell of said apparatus should be impeded from a handover back to said source cell; and
transmitting said prohibit time to said user equipment.
